Europäisches Patentamt

European Patent Office

Office européen des brevets

(19)

(11) **EP 0 457 647 B1**

(12) **FASCICULE DE BREVET EUROPEEN**

(45) Date de publication et mention
de la délivrance du brevet:
**04.09.1996 Bulletin 1996/36**

(51) Int. Cl.⁶: **C08F 297/04**

(21) Numéro de dépôt: **91401176.2**

(22) Date de dépôt: **06.05.1991**

(54) **Procédé de fabrication de résine styrénique transparente et résistante au choc**

Verfahren zur Herstellung von transparentem schlagfestem Styrolharz

Process for the preparation of transparent and shock resistant styrene resin

(84) Etats contractants désignés:
**AT BE DE ES FR GB IT NL SE**

(30) Priorité: **16.05.1990 FR 9006110**

(43) Date de publication de la demande:
**21.11.1991 Bulletin 1991/47**

(73) Titulaire: **ELF ATOCHEM S.A.**
**F-92800 Puteaux (FR)**

(72) Inventeurs:
• **Nicol, Pascal**
**F-64000 Pau (FR)**
• **Orozco, Laurence**
**F-64140 Lons (FR)**

(74) Mandataire: **Foiret, Claude Serge et al**
**ELF ATOCHEM S.A.,**
**Département Propriété Industrielle,**
**La Défense 10**
**92091 Paris Cédex 42 (FR)**

(56) Documents cités:
**FR-A- 1 573 989          FR-A- 2 240 244**
**GB-A- 1 409 956          US-A- 3 939 224**

**Description**

La présente invention concerne un procédé de fabrication de résine styrénique transparente et résistante au choc consistant à copolymériser anioniquement un diène conjugué et un monomère vinylaromatique hydrocarboné en milieu homogène concentré dans un solvant aromatique hydrocarboné.

La copolymérisaton anionique pour la fabrication de tels produits est connue et décrite dans de nombreux brevets dont un des plus représentatifs est le US-A 3 639 517. Selon ce document la copolymérisation anionique s'effectue en plusieurs étapes à des pressions suffisantes pour maintenir le milieu réactif fortement liquide. Bien qu'il soit précisé que la copolymérisation puisse se faire en absence de solvant, il est impossible de réaliser industriellement en phase sèche cette polymérisation anionique. En phase sèche pour obtenir un milieu liquide apte à la polymérisation anionique, il est nécessaire de travailler à des températures supérieures à 180°C qui dégradent très rapidement et de manière irréversible les sites actifs. En conséquence, il serait nécessaire pour cette voie, d'utiliser des réacteurs à très faible temps de séjour, de l'ordre de quelques dizaines de secondes. Un tel système est trop risqué du point de vue industriel. De ce document il ressort que, pratiquement, la copolymérisation anionique des monomères vinylaromatiques et des diènes conjugués doit se faire en milieu fortement dilué. La copolymérisation anionique en milieu fortement dilué provoque, outre l'inconvénient de la manipulation d'une grande quantité de solvant qui nécessite des appareillages volumineux et des opérations complémentaires pour son élimination finale, une plus forte dégradation des sites actifs dans les masses polymériques que dans le cas d'une copolymérisation en milieu concentré. Toutefois selon les procédés décrits aucun n'a mis en évidence la possibilité de réaliser une copolymérisation anionique en milieu concentré. Les concentrations maximales connues sont de l'ordre de 30 pour cent en poids de polymérisat dans le solvant. Cette concentration, pour maintenir un sat dans le solvant. Cette concentration, pour maintenir un milieu réactionnel liquide et homogène, ne peut effectivement être dépassée dans la plupart des solvants connus et utilisés dans ce type de polymérisation anionique. Des concentrations supérieures conduisent à un milieu polymérique liquide hétérogène se révélant par la présence de phases multiples. Ces phases multiples provoquent dans le copolymère final une hétérogénéité de structure, par exemple de masses moléculaires, d'indice de polydispersité, qui a pour conséquence de rendre très délicat, voire impossible le contrôle des propriétés finales de la résine.

Le document GB-A-1 409 956 enseigne qu'il est possible de réaliser une copolymérisation anionique en forte concentration de monomère mais en faible concentration de copolymère ou polymère.

Le document FR-A-1 573 989 enseigne qu'il est possible de copolymériser anioniquement l'alphaméthylstyrère avec un diène en présence d'un solvant hydrocarboné inerte et d'un additif polaire.

Les documents FR-A-2 240 244 et US 3, 939,224 décrivent la copolymérisation anionique de copolymères styrène/diène en présence de fortes quantités d'un solvant hydrocarboné.

Le procédé de fabrication, selon l'invention, de copolymères blocs consiste à copolymériser anioniquement en milieu solvant dans une première étape un monomère vinylaromatique hydrocarboné et dans une deuxième étape un diène conjugué, il est caractérisé en ce que dans la première étape on polymérise le monomère vinylaromatique hydrocarboné en solution dans un solvant aromatique hydrocarboné jusqu'à l'obtention d'un milieu homogène de viscosité supérieure à 300 Pa.s à 20°C pour une concentration en polymère dans le solvant aromatique hydrocarboné comprise entre 60 % et 90 % en poids et en ce que dans une deuxième étape, après introduction de diène conjugué, on copolymérise jusqu'à l'obtention d'un milieu homogène de viscosité supérieure à 300 Pa.s à 90°C pour une concentration en copolymère dans le solvant aromatique hydrocarboné comprise entre 70 et 90 % en poids, sans que dans chacune des deux étapes la viscosité dépasse 3000 Pa.s.

Afin d'obtenir les milieux visqueux homogènes il est impératif d'utiliser comme solvant du milieu réactionnel de l'éthylbenzène ou éventuellement du toluène.

Le milieu visqueux homogène se présente dans les deux étapes en une seule phase exempte de toute précipitation de matière. Les viscosités inférieures ou égales à 500 Pa.s peuvent être mesurées au moyen d'un appareil RHEOMAT 30 de type COUETTE, fonctionnant en écoulement permanent. Cet appareil est équipé d'une cellule de mesure DC 50, dite autoclave. Ce type d'appareil est conforme à la norme NF-T51-211. Les viscosités supérieures ou égales à 500 Pa.s peuvent être mesurées au moyen d'un rhéomètre capillaire GOETTFERT (RHEOGRAPH 2002) avec un capillaire de 0,5 mm de diamètre. et de 30 mm de longueur, le capteur de pression étant sous 290 bars et la vitesse de cisaillement de 10 à 1000 s$^{-1}$. Ces viscosités sont mesurées sous atmosphère inerte.

Dans la première étape le monomère vinylaromatique hydrocarboné est mis en solution dans le solvant aromatique en présence de l'amorceur de polymérisation anionique. La polymérisation s'effectue à une température de 20 à 110°C et de préférence de 50 à 90°C sous des pressions de 1 à 10 bars. La polymérisation est poursuivie jusqu'à ce que le milieu réponde aux conditions précédentes. A ce stade est ajouté le diène conjugué, un éventuel ajout d'amorceur de polymérisation anionique étant effectué, la copolymérisation se déroule à une température de 50 à 110°C et de préférence de 80 à 100°C sous des pressions de 1 à 10 bars et est poursuivie jusqu'à l'obtention du milieu homogène tel que revendiqué. Du fait de la viscosité du milieu il est important d'avoir une agitation des réactifs bien adaptée pour réaliser un ensemble homogène. Il est fortement recommandé que l'agitation balaie parfaitement les parois du réacteur de polymérisation afin d'éviter tout dépôt qui, ne suivant pas la cinétique réactionnelle du milieu, va provoquer en fin de chaque étape des hétérogénéités dans le polymère et copolymère visqueux formés.

L'initiateur de polymérisation anionique est de façon classique un composé du lithium. Cet initiateur est décrit, en particulier, dans le US-A 3 317 918, le plus courant étant le n-butyllithium.

En fin de copolymérisation du diène conjugué l'initiateur de polymérisation anionique est détruit par un composé polyfonctionnel possédant au moins deux fonctions capables de réagir avec les fonctions terminales du copolymère. Le composé polyfonctionnel possède cependant de préférence au moins trois fonctions réactives de façon à former des copolymères branchés en étoile. Ces composés polyfonctionnels sont décrits dans le US-A 3 281 383, ce sont par exemple des polyépoxydes tels que les huiles de lin ou de soja époxydées, ou encore les polyimines, les polyisocyanates, les polyaldéhydes, les polyhalogénures. Les quantités de composé polyfonctionnel est en général suffisante pour assurer la destruction complète des composés de lithium lui-même utilisé en quantité de 0,1 à 1,5 partie pour 100 parties de monomère et de diène conjugué. Il peut éventuellement être utile, pour assurer une bonne neutralisation des extrémités des chaînes de faire subir au mélange un dernier traitement par un agent monofonctionnel de terminaison de chaîne du type par exemple monoalcool, monoacide ou eau.

Dans la deuxième étape, afin de fabriquer des copolymères multiblocs fonctionnels, il est possible d'associer au diène conjugué un monomère vinylaromatique hydrocarboné, de préférence identique à celui utilisé dans la première étape.

Selon l'invention la totalité du solvant nécessaire à l'ensemble de la copolymérisation peut être introduite dans le milieu réactionnel en début de la première étape. Toutefois il peut être préféré d'ajouter simultanément le solvant et le monomère et/ou le diène dans chaque étape de façon que la concentration en solvant reste sensiblement constante dans le milieu réactionnel.

Le monomère vinylaromatique hydrocarboné utilisable dans le procédé contient de 8 à 18 atomes de carbone par molécule. Ce peut être par exemple le styrène, le 3-méthylstyrène, le 4-n-propylstyrène, le 4-cyclohexylstyrène.

Le diène conjugué pouvant être utilisé contient habituellement de 4 à 12 atomes de carbone dans sa molécule. Ce peut être par exemple le 1,3-butadiène, l'isoprène, le 2,3 diméthyl-1,3-butadiène.

De façon générale dans le procédé 15 à 40 parties de diène sont copolymérisées avec 60 à 85 parties de monomère vinylaromatique hydrocarboné, ce monomère pouvant être polymérisé soit en totalité dans la première étape, soit partiellement dans la première étape et partiellement en mélange avec le diène dans la seconde étape.

Afin de finalement récupérer le copolymère, après un éventuel ajout de système antioxydant, la masse visqueuse homogène de copolymère est traitée à une température supérieure à celle d'ébullition du solvant aromatique hydrocarboné utilisé. Une température de traitement inférieure à 250°C sous pression atmosphérique ou sous un vide maximum de 200 mbars sont des conditions d'élimination du solvant parfaitement recommandables. Le copolymère récupéré après ce traitement peut encore contenir des traces de solvant qui sont éliminées de façon classique par extrusion dégazage ou encore par traitement à la vapeur du copolymère sous forme de granulés.

Le procédé de l'invention est des plus simples puisqu'il peut être réalisé dans un seul réacteur et qu'une seule étape flash de dégazage est suffisante pour éliminer la quasi totalité du solvant, les dernières parties de solvant pouvant être éliminées comme cité ci-dessus. Cette simplification peut être envisagée avec un pourcentage de solvant dans le milieu réactionnel, au terme des étapes de polymérisation avant dégazage, inférieur à 50 % en poids et mieux inférieur à 30 %.

Les exemples suivants illustrent l'invention sans toutefois la limiter.


## EXEMPLE 1

Dans un réacteur de 20 litres en acier inoxydable équipé d'une régulation de température et d'un agitateur du type double ruban couplé à un moteur de 0,55 kw, sont chargés, après une purge à l'azote et plusieurs lavages avec une solution de n.BuLi dans l'éthylbenzène, 3000 g d'éthylbenzène sec et 9,6 g de n.BuLi.

250 g de styrène sont introduits en moins de 5 minutes à une température comprise entre 20 et 30°C. La température s'élève à une valeur voisine de 50°C. Cette période d'amorçage n'excède pas 20 minutes. Sont alors introduits en continu 5000 g de styrène dans un temps inférieur à 2 heures. En un temps inférieur à 30 minutes la température s'élève à environ 70°C. Cette température est maintenue pendant cette première étape de polymérisation du styrène. Lorsque la viscosité du milieu mesurée à 20°C atteint sensiblement 500 Pa.s sont introduits 1750 g de butadiène liquide. La température s'élève à environ 90°C et est maintenue à cette valeur pendant la polymérisation du butadiène. La pression dans le réacteur est de 7 bars. Lorsque la viscosité du milieu, mesurée à 90°C atteint sensiblement 580 Pa.s, 38 g d'huile de soja époxydée (ESTABEX 2307 ®) sont introduits dans le réacteur, la température restant maintenue à 90°C pendant environ 30 minutes. Le mélange réactionnel est désactivé par $CO_2$ sous 3 bars puis une quantité d'eau calculée sensiblement de manière stoechiométrique par rapport au lithium.

Sont ensuite introduits de façon classique des antioxydants et plus précisément 0,25 % en poids d'IRGANOX 1076 ® et 0,7 % en poids de trinonylphenylphosphite (STAVINOR ®).

Le copolymère est ensuite dégazé en une seule étape flash dans un système classique constitué d'un préchauffeur tubulaire encastré dans une chambre de dévolatisation. Cette opération est réalisée à 200°C à une pression de 700 mbars et permet de générer des granulés d'une résine transparente dont la teneur résiduelle en solvant est comprise entre 1 et 2 %. Ce solvant résiduel peut être éliminé par dégazage, soit par extrusion sous vide soit par étuvage des granulés sous vide, environ 100°C sous 15 mbars, ou encore par extraction (stripping) à l'eau sur les granulés. La teneur résiduelle finale en solvant est inférieure à 300 ppm.

Les masses moléculaires déterminées à partir des courbes GPC (chromatographie par perméation de gel ou gel permeation chromatography) pour les produits de chacune des étapes sont données dans le tableau suivant :

|      | Mw      | Mn      | I   |
|------|---------|---------|-----|
| PS   | 42 000  | 35 000  | 1,2 |
| SB   | 60 000  | 46 000  | 1,3 |
| SB*  | 122 000 | 72 000  | 1,7 |

Mw = Masse moléculaire moyenne en poids
Mn = Masse moléculaire moyenne en nombre
$I = \frac{Mw}{Mn}$
PS = Polystyrène de la première étape
SB = Copolymère de la seconde étape
SB* = Copolymère après traitement avec l'huile de soja époxydée

## EXEMPLE 2 (comparatif)

L'exemple précédent est repris dans son ensemble à l'exception près que l'éthylbenzène est remplacé par le cyclohexane.

La viscosité du milieu avant l'ajout du butadiène est de 255 Pa.s à 70°C, ce qui correspond pour l'exemple à une viscosité de 17 Pa.s à 70°C pour une viscosité de 500 Pa.s à 20°C.

La viscosité du milieu correspondant à celle de la seconde étape de l'exemple 1 est de 8300 Pa.s à 90°C.

Des courbes GPC il ressort que les produits obtenus en polymérisation anionique en milieu cyclohexane ont des dispersions de masses moléculaires irrégulières et ne sont pas couplés.

Les résultats obtenus sont donnés dans le tableau suivant :

|      | Mw      | Mn     | I    |
|------|---------|--------|------|
| PS   | 70 000  | 28 000 | 2,5  |
| SB   | 106 000 | 35 000 | 3,02 |
| SB*  | 130 000 | 34 000 | 3,8  |

## EXEMPLE 3

Dans les conditions de l'Exemple 1 l'amorçage de la polymérisation du styrène s'effectue en présence de 2,4 g de n.BuLi au lieu de 9.6 g. La période d'amorçage passée sont introduits 3250 g de styrène. La polymérisation se fait en 1 heure 24 minutes à 70°C. A ce stade sont ajoutés 7,2 g de n.BuLi et 1750 g de styrène. La polymérisation se poursuit pendant 40 minutes à 70°C.

La suite du procédé est poursuivie selon l'Exemple 1.

La viscosité du milieu de la fin de polymérisation du styrène est 415 Pa.s mesuré à 20°C. Celle du milieu en fin de polymérisation du butadiène est de 304 Pa.s mesurée à 90°C.

Les résultats obtenus sont donnés dans le tableau suivant :

|  | Mw | Mn | I |
|---|---|---|---|
| PS | 79 000 | 32 000 | 2,5 |
| SB | 91 000 | 54 000 | 1,7 |
| SB* | 150 000 | 77 000 | 1,9 |

Le rapport I de 2,5 du matériau obtenu en fin de polymérisation du styrène montre la présence d'une double distribution du polystyrène avec deux pics dont l'indice de polymolécularité, pris individuellement sur chaque pic est inférieur à 1,3 ce qui est en parfaite conformité avec une polymérisation vivante dans les conditions de l'Exemple.

**Revendications**

1.  Procédé de fabrication de copolymères blocs consistant à polymériser anioniquement en milieu solvant dans une première étape un monomère vinylaromatique hydrocarboné et dans une deuxième étape un diène conjugué caractérisé en ce que dans la première étape on polymérise le monomère vinylaromatique hydrocarboné en solution dans un solvant aromatique hydrocarboné jusqu'à l'obtention d'un milieu homogène de viscosité supérieure à 300 Pa.s à 20°C pour une concentration en polymère dans le solvant aromatique hydrocarboné comprise entre 60 et 90 % en poids et en ce que dans une deuxième étape, après introduction de diène conjugué, on copolymérise jusqu'à l'obtention d'un milieu homogène de viscosité supérieure à 300 Pa.s à 90°C pour une concentration en copolymère dans le solvant aromatique hydrocarboné compris entre 70 et 90 % en poids, sans que dans chacune des deux étapes la viscosité dépasse 3000 Pa.s.

2.  Procédé selon la revendication 1 caractérisé en ce que le solvant aromatique hydrocarboné est l'éthylbenzène.

3.  Procédé selon l'une des revendications 1 ou 2 caractérisé en ce que le solvant et le monomère et/ou le diène sont ajoutés simultanément dans chaque étape de façon à maintenir sensiblement constante la concentration en solvant dans le milieu réactionnel.

4.  Procédé selon l'une des revendications 1 à 3 caractérisé en ce qu'il est exécuté dans un réacteur unique.

5.  Procédé selon l'une des revendications 1 à 4 caractérisé en ce que le pourcentage en poids de solvant dans le milieu réactionnel, au terme des étapes de polymérisation avant dégazage, est inférieur à 50 %.

**Claims**

1.  Process for the manufacture of block copolymers which comprises anionically polymerizing in solvent medium, in a first stage, a vinylaromatic hydrocarbon monomer and, in a second stage, a conjugated diene, characterized in that, in the first stage, the vinylaromatic hydrocarbon monomer is polymerized in solution in an aromatic hydrocarbon solvent until a homogeneous medium with a viscosity greater than 300 Pa • s at 20°C is obtained for a concentration of polymer in the aromatic hydrocarbon solvent of between 60 and 90 % by weight and in that, in a second stage, after introduction of conjugated diene, copolymerization is carried out until a homogeneous medium with a viscosity greater than 300 Pa • s at 90°C is obtained for a concentration of copolymer in the aromatic hydrocarbon solvent of between 70 and 90 % by weight, without the viscosity exceeding 3000 Pa • s in either of the two stages.

2.  Process according to Claim 1, characterized in that the aromatic hydrocarbon solvent is ethylbenzene.

3.  Process according to either of Claims 1 and 2, characterized in that the solvent and the monomer and/or the diene are added simultaneously in each step, so as to keep substantially constant the concentration of solvent in the reaction medium.

4.  Process according to one of Claims 1 to 3, characterized in that it is carried out in a single reactor.

5.  Process according to one of Claims 1 to 4, characterized in that the percentage by weight of solvent in the reaction medium, on completion of the polymerization stages before degassing, is less than 50 %.

**Patentansprüche**

1. Verfahren zur Herstellung von Blockcopolymeren, bei dem in einem ersten Schritt ein vinylaromatisches Kohlenwasserstoffmonomeres und in einem zweiten Schritt ein konjugiertes Dien in einem Lösemittelmilieu anionisch polymerisiert werden, dadurch gekennzeichnet, daß man im ersten Schritt das vinylaromatische Kohlenwasserstoffmonomere in Lösung in einem aromatischen Kohlenwasserstofflösemittel polymerisiert, bis man ein homogenes Milieu mit einer Viskosität von mehr als 300 Pa•s bei 20 °C mit einer Konzentration an Polymer im aromatischen Kohlenwasserstofflösemittel zwischen 60 und 90 Gew.-% erhält, und man in einem zweiten Schritt, nach Zugabe eines konjugierten Diens, eine Copolymerisation durchführt, bis man ein homogenes Milieu mit einer Viskosität oberhalb von 300 Pa•s bei 90 °C bei einer Konzentration an Copolymer im aromatischen Kohlenwasserstofflösemittel zwischen 70 und 90 Gew.-% erhält, ohne daß die Viskosität in den beiden Schritten jeweils 3000 Pa•s überschreitet.

2. Verfahren nach Anspruch 1, dadurch gekennzeichnet, daß das aromatische Kohlenwasserstofflösemittel Ethylbenzol ist.

3. Verfahren nach einem der Ansprüche 1 oder 2, dadurch gekennzeichnet, daß das Lösemittel und das Monomere und/oder das Dien in jedem Schritt gleichzeitig hinzugegeben werden, um im Reaktionsmilieu eine nahezu konstante Konzentration an Lösemittel aufrechtzuerhalten.

4. Verfahren nach einem der Ansprüche 1 bis 3, dadurch gekennzeichnet, daß es in einem einzigen Reaktor durchgeführt wird.

5. Verfahren nach einem der Ansprüche 1 bis 4, dadurch gekennzeichnet, daß die Gewichtsprozentzahl an Lösemittel in dem Reaktionsmilieu am Ende der Polymerisationsschritte vor dem Entgasen weniger als 50 % beträgt.